# EUROPÄISCHE PATENTSCHRIFT

(11) **EP 1 847 733 B1**
(45) Veröffentlichungstag und Bekanntmachung des Hinweises auf die Patenterteilung: **03.06.2009**
(21) Anmeldenummer: 07105426.6
(22) Anmeldetag: 02.04.2007
(51) Int. Cl.: F16H 63/30

(54) **Verfahren zur Bestimmung der Position eines Schaltelementes**
Method for determining the position of switching element
Procédé destiné à la détermination de la position d'un élément de commutation

(30) Priorität: 20.04.2006 DE 102006018313
(43) Veröffentlichungstag der Anmeldung: 24.10.2007
(73) Patentinhaber: ZF Friedrichshafen AG, 88038 Friedrichshafen (DE)
(72) Erfinder: Petzold, Rainer, 88045, Friedrichshafen (DE); Ingenbleek, Robert, 88079, Kressbronn (DE); Steinborn, Mario, 88046, Friedrichshafen (DE)

(56) Entgegenhaltungen:
- EP-A2- 0 723 097
- DE-A1- 19 731 842
- US-A- 5 832 777

## Beschreibung

Die Erfindung betrifft ein Verfahren zur Bestimmung der Position eines Schaltelementes, beispielsweise in einem Kraftfahrzeug, nach der im Oberbegriff von Anspruch 1 näher definierten Art und eine Vorrichtung zur Durchführung des Verfahrens nach Anspruch 4.

Automatisierte Schaltgetriebe bestehen hinsichtlich ihrer Hauptkomponenten aus konventionellen, gegebenenfalls auch manuell betätigbaren Schaltgetrieben, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Stellzylinder oder als elektrische Aktuatoren ausgebildet, welche auf Stellmittel für die genannten Getriebefunktionen einwirken. Die Stellmittel können am oder im Getriebe angeordnet sein.

Zur Ansteuerung von hydraulischen bzw. pneumatischen Betätigungsmitteln sind Druckerzeugungs- und Steuerungsvorrichtungen notwendig, die gemäß dem Stand der Technik eine Hydraulik- bzw. Pneumatikpumpe als Druckerzeugungsvorrichtung, einen Druckspeicher, eine hydraulische bzw. pneumaische Steuerungseinheit mit Steuerungsventilen und Sensoren umfassen, welche mit einer zentralen Steuerungs- und Regelungsvorrichtung in Verbindung stehen und von dieser nach dort abgespeicherten Steuerungs- und Regelungsfunktionen ansteuerbar sind.

Bei als Klauengetrieben ausgestalteten Zahnräderwechselgetrieben für Kraftfahrzeuge wird die drehmomentübertragende Verbindung zweier Getriebeelemente durch eine Kupplungsverzahnung hergestellt. Bei solchen Klauengetrieben bleibt mindestens ein Teil der Laufverzahnungen im Dauereingriff und die Stirnräder werden über klauenartige Kurzverzahnungen, welche sich seitlich an den Stirnrädern befinden, durch Schaltmuffen mit ihren Wellen verbunden. Zur Schalterleichterung werden die Klauen mit Synchronisier- und Sperrsynchronisiereinrichtungen ergänzt. Die Synchronisiereinrichtungen dienen zur Drehzahlanpassung von zwei unterschiedlich schnell rotierenden Getriebeelementen und den damit verbundenen Teilen so, dass sie ohne Ratschgeräusch miteinander verbunden werden können. Bekannte Synchronisiereinrichtungen weisen Sperrvorrichtungen auf, die erst im Augenblick des Gleichlaufs der zu verbindenden Getriebeelemente gelöst werden und die formschlüssige Verbindung zwischen den zu verbindenden Getriebeelementen erlauben. Durch solche Sperrvorrichtungen werden Ratschgeräusche und Beschädigungen an den formschlüssigen Schaltelementen verhindert.

Nachteilig dabei ist, dass sich aufgrund der beim Gangwechsel auftretenden Schaltkräfte Stellmittel, wie beispielsweise Schaltschienen und/oder Schaltgabeln, bis zu einem bestimmtem Maß verbiegen können, so dass letztendlich die am Schaltgabelfuß erfasste Stellung der Schaltgabel nicht der genauen Position der Schaltmuffe entspricht. Oft sind aufgrund der hohen Getriebebelastungen, die zu Verspannungen bzw. Verbiegungen der Getriebewellen führen, die Schaltgabeln mit den Schaltmuffen nicht über den gesamten Umfang der Schaltmuffen in Kontakt, um Verklemmungen zwischen Schaltgabel und Schaltmuffe zu vermeiden. Durch diese Maßnahme wird jedoch die Steifigkeit der Schaltgabel reduziert und damit die Tendenz zu Verbiegungen der Schaltgabel verstärkt.

In der DE 103 36 971 B3 ist eine Anordnung zur Erfassung der Lageposition einer Schaltgabel oder Schaltschwinge offenbart, bei der ein präzises Wegsignal für die Verstellung der von einer Schaltgabel betätigten Schaltmuffe erzielbar ist. Dadurch, dass ein Positionsgeber im wesentlichen am Ende der Schaltgabel angeordnet ist, werden mögliche Durchbiegungen der Schaltgabel kompensiert, so dass über eine Geber-Sensor-Einheit die genaue Lage der auf der Getriebewelle angeordneten Schaltmuffe ermittelt werden kann. Für eine vorteilhafte berührungslose Lageerfassung der Schaltgabel ist als Positionsgeber ein Magnet vorgesehen, während der im Abstand dazu am bzw. im Getriebegehäuse angeordnete Sensor als Magnetfeldsensor ausgebildet ist. Zur Befestigung bzw. Aufnahme des Magneten ist an einem der beiden Enden der Schaltgabel ein Fortsatz vorgesehen, der vorzugsweise aus der Schaltgabel herausgebildet ist. Der Magnet ist wiederum in einem Element aufgenommen, das am Fortsatz befestigt ist. Da der Sensor in einem separaten Gehäuse aufgenommen ist, das in einer Öffnung des Getriebegehäuses eingesteckt ist, können für eine notwendige horizontale Ausrichtung des Sensors Schrägen im Getriebegehäuse ausgeglichen werden.

Die US 5 832 777 A offenbart eine Schalteinrichtung, mit einer Schaltgabel, welche an einer Schaltstange angeordnet ist und beim Schalten einer Gangstufe eine Synchronisiereinrichtung betätigt. Auf der Schaltstange ist ein Wegsensor angeordnet, über welchen eine Betätigung der Schaltstange erfasst wird. An der Schaltgabel sind Sensoren angeordnet, um eine Belastung der Synchronisiereinrichtung genauer bestimmen zu können. In der US 5 832 777 A wird weiterhin erwähnt, dass die Position der Schaltgabel über einen im Wesentlichen am Ende der Schaltgabel angeordneten Positionssensor erfasst werden kann.

Die EP 0 723 097 A2 offenbart ein hydraulisches Steuersystem zum Betätigen einer Synchronisiereinrichtung in einem Getriebe. Es sind Einrichtungen vorgesehen zur Feststellung, wann ein axialer Eingriff zwischen Zähnen der Synchronisiereinrichtung und einem Zahnrad auftritt. Dies wird durch Messen der Änderung eines Hydraulikdruckes in einer Kolben/Zylindereinheit realisiert, wobei sich die Änderung des Hydraulikdruckes aus der Bewegung der Synchronisiereinrichtung ergibt.

Nachteile des Standes der Technik sind, dass zur genauen Bestimmung der Position der Schaltmuffe separate Positionsgeber und Sensoren an der Schaltgabel bzw. am Getriebegehäuse angebracht werden müssen, wofür zusätzliche Vorrichtungen notwendig sind und wodurch die Bauteileanzahl steigt und somit höhere Kosten entstehen.

Der vorliegenden Erfindung liegt die Aufgabe zugrunde, ein Verfahren und eine Vorrichtung darzustellen, durch welches bzw. welche die Position eines Schaltelementes, beispielsweise eines Kraftfahrzeuges, genau bestimmt werden kann und die Nachteile des Standes der Technik beseitigt werden.

Die der Erfindung zugrunde liegende Aufgabe wird durch ein, auch die kennzeichnenden Merkmale des Hauptanspruchs aufweisendes, gattungsgemäßes Verfahren zur Bestimmung der Position eines Schaltelementes gelöst.

In Kraftfahrzeugen werden beispielsweise das Wählen und Schatten von Getriebegängen sowie das Betätigen der Schalt- und/oder Anfahrkupplung zwischen Antriebsmotor und Getriebe über Betätigungsmittel realisiert. Solche Betätigungsmittel können beispielsweise als druckmittelbeaufschlagbare Stellzylinder ausgebildet sein. Werden die Druckräume solcher Stellzylinder mit einem Druckmittel beaufschlagt, so entstehen in diesen Druckräumen entsprechende Schaltkräfte. Durch diese Schaltkräfte wird ein Kolben des Stellzylinders in eine entsprechende Richtung bewegt. Durch die Bewegung des Kolbens kann eine Kraft auf ein Stellmittel ausgeübt werden, welches mit dem Stellzylinder in Verbindung steht. Solche Stellmittel können beispielsweise als Schaltschienen ausgeführt sein, welche über Schaltgabeln mit Schaltmuffen in Verbindung stehen. Durch axiales Bewegen der Schaltschienen und somit der Schaltmuffen durch den Stellzylinder wird eine Schaltung einer Übersetzungsstufe in einem Getriebe realisiert. Hierbei wird beispielsweise ein Stirnrad über klauenartige Kurzverzahnungen, weiche seitlich am Stirnrad angeordnet sind, durch die Schaltmuffe drehfest mit einer Getriebewelle verbunden.

Bei einem Schaltvorgang in einem Getriebe werden durch die Schaltkraft des Stellzylinders die am Stellzylinder angeordneten Stellmittel, beispielsweise Schaltschienen oder Schaltgabeln, verformt. Da eine Wegänderung eines Stellzylinders sehr genau sensiert werden kann, kann auch die Verformung der Stellmittel sehr genau bestimmt werden. Die Wegänderung kann dabei aus einem bereits vorhandenen Signal gewonnen werden, beispielsweise aus dem Signal eines im Stellzylinder integrierten oder extern angebrachten Wegsensors. Ist die Verformung der Stellmittel bekannt, kann die Position der Schaltmuffe genauer bestimmt werden. Hierfür muss der Betätigungsdruck und somit die Schaltkraft des Betätigungsmittels durch eine andere Einrichtung zur Druckbestimmung bekannt sein, beispielsweise durch einen Drucksensor. In Abhängigkeit des Betätigungsdruckes bzw. der Schaltkraft kann auf die Verformung der Stellmittel geschlossen werden. Je größer der Betätigungsdruck bzw. die Schaltkraft des Stellzylinders, desto größer ist die Verformung der Stellmittel. Unter Berücksichtigung der Verformung der Stellmittel kann die Position der Schaltmuffe exakter bestimmt werden.

Der tatsächliche Zylinderweg bei einem Schaltvorgang setzt sich aus dem nominalen Zylinderweg und dem Weg der Durchbiegung der Stellmittel zusammen. Der nominale Zylinderweg ist der Weg, den der Stellzylinder zurücklegt, um eine Schaltung einer Übersetzungsstufe sicher zu gewährleisten, wobei die Stellmittel nicht verformt werden. Der nominale Zylinderweg für die Schaltung einer Übersetzungsstufe eines Getriebes ist eine feste Größe, welche in einer Steuerungs- und Regelungseinheit für jeden Stellzylinder gespeichert ist. Die Verformung eines Stellmittels ist umso größer, je größer die Schaltkraft des Stellzylinders ist. Durch ein Messen der Wegdifferenz zwischen des nominalen und des durch den Steuerdruck erzeugten Stellweges (Verformungsmessung) kann auf die genaue Position der Schaltmuffe geschlossen werden. Der Weg der Durchbiegung ergibt sich aus dem gesamt zurückgelegten Zylinderweg abzüglich des nominalen Zylinderweges. Der bekannte nominale Zylinderweg wird über die Steuerungs- und Regelungseinheit mit dem tatsächlich zurückgelegten Zylinderweg verrechnet. Besteht keine Wegdifferenz zwischen dem nominalen und dem tatsächlichen Stellweg des Betätigungsmittels, so entspricht die Position der Schaltmuffe direkt dem vom intern oder extern angeordneten Wegsensor des Betätigungsmittels sensierten Weg. Falls der tatsächlich zurückgelegte Zylinderweg größer ist als der nominale Zylinderweg, so stellt diese Wegdifferenz ein Maß für die Verformung der Stellmittel dar. Unter Berücksichtigung der Verformung der Stellmittel wird die genaue Position der Schaltmuffe ermittelt.

Außerdem ist es denkbar, die Verformung der Stellmittel, welche von der Schaltkraft des Betätigungsmittels abhängig ist, über Dehnungsmessstreifen zu erfassen. Wird ein Dehnungsmessstreifen aufgrund einer Verformung eines Stellmittels verformt, so ändert sich sein elektrischer Widerstand. Über das Signal der Widerstandsänderung kann die Verformung des Stellmittels bestimmt und somit die genaue Position der Schaltmuffe ermittelt werden.

Durch das erfindungsgemäße Verfahren bzw. die erfindungsgemäße Vorrichtung kann über den Betätigungsdruck bzw. die Schaltkraft des Betätigungsmittels die Verformung des Stellmittels ermittelt werden, beispielsweise die Verformung einer Schaltschiene oder einer Schaltgabel. Über das Wegsignal des Stellzylinders kann unter Berücksichtigung der Verformung des Stellmittels die genaue Position der Schaltmuffe bestimmt werden. Somit werden keine separaten Sensoren oder Positionsgeber an der Schaltgabel bzw. am Getriebegehäuse benötigt, wodurch sich Bauteilkosten einsparen lassen.

Im Folgenden wird das Grundprinzip der Erfindung an Hand einer Zeichnung beispielhaft näher erläutert.

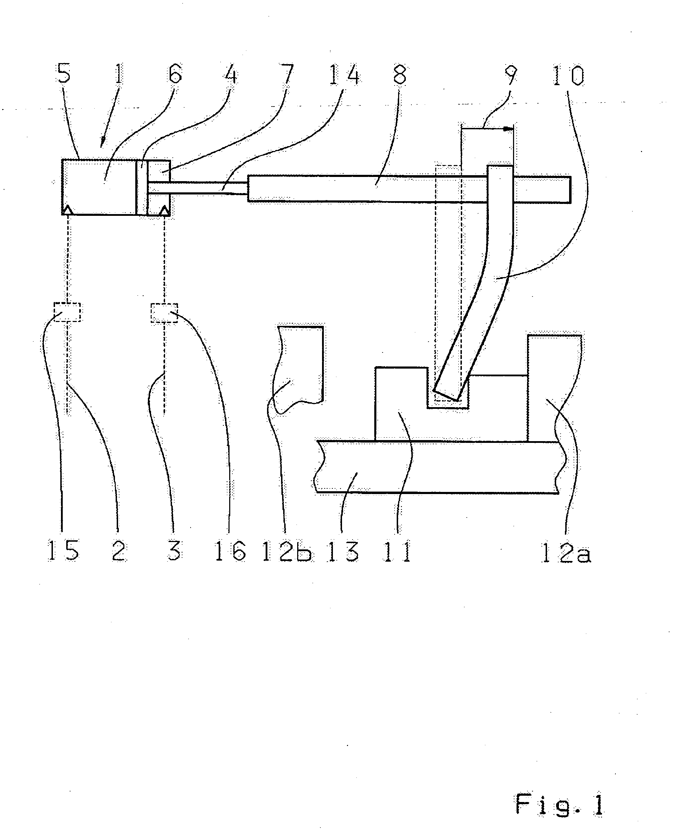

Die einzige Figur dieser Zeichnung zeigt ein Ausführungsbeispiel zur Bestimmung der Position einer Schalteinrichtung unter Berücksichtigung der Verformung einer Schaltgabel.

Die Figur zeigt ein Ausführungsbeispiel zur Bestimmung der Position eines Schaltelementes 11, beispielsweise einer Schaltmuffe, unter Berücksichtigung der Verformung einer Schaltgabel 10. Druckmittelleitungen 2, 3 sind mit Druckräumen 6, 7 eines Betätigungsmittels 1, beispielsweise eines Stellzylinders, verbunden. Der Stellzylinder 1 weist einen Zylinder 5, einen Kolben 4 und eine Kolbenstange 14 auf. Die Kolbenstange 14 steht mit einer Schaltschiene 8 in Verbindung, an welcher eine Schaltgabel 10 angeordnet ist. Die Schaltgabel 10 greift in eine Schaltmuffe 11 ein, welche axial verschiebbar auf einer Welle 13 angeordnet ist, beispielsweise einer Getriebewelle. Durch ein entsprechendes Ansteuern einer Druckregelungsvorrichtung (hier nicht gezeigt) wird ein entsprechender Steuerdruck in der Druckmittelleitung 2 angelegt, wodurch eine entsprechende Schaltkraft im Druckraum 6 des Stellzylinders 1 entsteht. Dieser Steuerdruck wird von einer Einrichtung zur Druckbestimmung erfasst, beispielsweise von einem Drucksensor 15, wodurch auf die Schaltkraft des Stellzylinders 1 geschlossen werden kann. Durch diesen Steuerdruck bzw. die Schaltkraft im Druckraum 6 des Stellzylinders 1 wird der Kolben 4 im Zylinder 5 und die am Kolben 4 angeordnete Kolbenstange 14 in der Zeichenblattebene nach rechts bewegt. Der Kolben 4 und die Kolbenstange 16 können ebenso aus einem Stück gefertigt sein. Durch die Bewegung des Kolbens 4 und somit der Kolbenstange 14 in der Zeichenblattebene nach rechts werden die Schaltschiene 8, die Schaltgabel 10 und die Schaltmuffe 11 ebenfalls nach rechts bewegt. Der Kolben 4 wird dabei solange bewegt, bis die Kupplungsverzahnung der Schaltmuffe 11 und die Kupplungsverzahnung eines Strinrades 12a drehfest miteinander in Verbindung stehen. Dieser zurückgelegte Weg entspricht dem nominalen Weg des Stellzylinders 1. Ist der Betätigungsdruck im Druckraum 6 des Stellzylinders 1 größer als er für den nominalen Weg benötigt wird, so wird die Schaltschiene 8 weiter nach rechts bewegt, wodurch es zu einer Verformung der Schaltgabel 10 kommt. Wird von dem gesamt zurückgelegten Weg des Kolbens 4 der nominale Weg abgezogen, so erhält man eine Wegdifferenz 9 zwischen der Bewegung des Kolbens 4 und der Schaltmuf fe 11, welche durch die Verformung der Schaltgabel 10 entsteht. Über diese Wegdifferenz 9 wird in beispielsweise einer Steuerungs- und Regelungseinheit die exakte Position der Schaltmuffe 11 berechnet.

Eine Betätigung der Schaltmuffe 11 in der Zeichenblattebene nach links geschieht in entsprechend umgekehrter Weise. Hierbei wird in der Druckmittelleitung 3 ein entsprechender Steuerdruck angelegt, wodurch eine entsprechende Schaltkraft im Druckraum 7 des Stellzylinders 1 entsteht. Dieser Steuerdruck wird von einer Einrichtung zur Druckbestimmung erfasst, beispielsweise von einem Drucksensor 16, wodurch auf die Schaltkraft des Stellzylinders 1 geschlossen werden kann. Durch diesen Steuerdruck bzw. die Schaltkraft im Druckraum 7 des Stellzylinders 1 wird der Kolben 4 im Zylinder 5 und die am Kolben 4 angeordnete Kolbenstange 14 in der Zeichenblattebene nach links bewegt. Der Kolben 4 wird dabei solange bewegt, bis die Kupplungsverzahnung der Schaltmuffe 11 und die Kupplungsverzahnung eines Strinrades 12b drehfest miteinander in Verbindung stehen.

Bei der beschriebenen Ausführungsform wird der Steuerdruck in der Druckmittelleitung 2 vom Drucksensor 15 und der Steuerdruck in der Druckmittelleitung 3 vom Drucksensor 16 ermittelt. Bei einer weiteren Ausführungsform kann ein Drucksensor 15, 16 derart angeordnet sein, dass er sowohl den Steuerdruck in der Druckmittelleitung 2 als auch den Steuerdruck in der Druckmittelleitung 3 erfassen kann. Auf diese Weise lässt sich ein Drucksensor 16, 15 einsparen, wodurch Bauteilkosten eingespart werden können und sich der Bauraum der Druckregelungsvorrichtung verringert.

### Bezugszeichen

- 1: Betätigungsmittel, Stellzylinder
- 2: Druckmittelleitung für das Betätigungsmittel
- 3: Pruckmittelleitung für das Betätigungsmittel
- 4: Kolben
- 5: Zylinder
- 6: Druckraum
- 7: Druckraum
- 8: Schaltschiene
- 9: Wegdifferenz durch Verformung
- 10: Schaltgabel
- 11: Schaltmuffe
- 12a: Stirnrad
- 12b: Stirnrad
- 13: Welle
- 14: Kolbenstange
- 15: Drucksensor
- 16: Drucksensor

## Patentansprüche

1. Verfahren zur Bestimmung der Position eines Schaltelementes (11), beispielsweise einer Schaltmuffe in einem vorzugsweise automatisierten Schaltgetriebe eines Kraftfahrzeuges, welches über ein Stellmittel durch ein Betätigungsmittel (1) betätigbar ist, **dadurch gekennzeichnet, dass** in Abhängigkeit eines Betätigungsdrucks des Betätigungsmittels (1), welcher von einer Einrichtung zur Druckbestimmung (15, 16) erfasst wird, eine Verformung des Stellmittels bestimmt wird und unter Berücksichtigung der Verformung des Stellmittels die Position des Schaltelements (11) bestimmt wird.

2. Verfahren nach Anspruch 1, **dadurch gekennzeichnet, dass** die Einrichtung zur Druckbestimmung (15, 16) als Drucksensor ausgebildet ist.

3. Verfahren nach Anspruch 1, **dadurch gekennzeichnet, dass** eine Änderung des Stellweges des Betätigungsmittels (1) mittels eines am Betätigungsmittel (1) intern oder extern angeordneten Wegsensors erfasst wird.

4. Vorrichtung zur Bestimmung der Position eines Schaltelementes (11), beispielsweise einer Schaltmuffe, welche ein Betätigungsmittel (1), ein Stellmittel und eine Einrichtung zur Druckbestimmung (15, 16) aufweist, **dadurch gekennzeichnet, dass** in Abhängigkeit eines Betätigungsdrucks des Betätigungsmittels (1) eine Verformung des Stellmittels bestimmt wird, wobei über ein Wegsignal eines an dem Betätigungsmittel (1) angeordneten Wegsensors unter Berücksichtigung der Verformung des Stellmittels die Position des Schaltelements (11) bestimmt wird.

5. Vorrichtung nach Anspruch 4, **dadurch gekennzeichnet, dass** das Betätigungsmittel (1) als Stellzylinder ausgebildet ist.

6. Vorrichtung nach Anspruch 5, **dadurch gekennzeichnet, dass** der Stellzylinder (1) als Aktuator eines Kraftfahrzeuggetriebes ausgebildet ist.

7. Vorrichtung nach Anspruch 6, **dadurch gekennzeichnet, dass** der Stellzylinder (1) als Stellvorrichtung für eine Getriebeschaltwelle ausgebildet ist.

8. Vorrichtung nach einem Ansprüche 4 bis 7, **dadurch gekennzeichnet, dass** das Betätigungsmittel (1) durch ein pneumatisch oder hydraulisch wirkendes Druckmedium betätigbar ist.

## Claims

1. Method for determining the position of a shifting element (11), for example of a shifting sleeve in a preferably automated gearbox of a motor vehicle which can be activated using an actuating means and by an activation means (1), **characterized in that** deformation of the actuating means is determined as a function of an activation pressure of the activation means (1), which is sensed by a pressure-determining device (15, 16), and the position of the shifting element (11) is determined by taking into account the deformation of the actuating means.

2. Method according to Claim 1, **characterized in that** the pressure-determining device (15, 16) is embodied as a pressure sensor.

3. Method according to Claim 1, **characterized in that** a change in the actuating travel of the activation means (1) is sensed by means of a travel sensor which is arranged internally or externally at the activation means (1).

4. Device for determining the position of a shifting element (11), for example of a shifting sleeve, which has an activation means (1), an actuating means and a pressure-determining device (15, 16), **characterized in that** deformation of the actuating means is determined as a function of an activation pressure of the activation means (1), wherein a travel signal of a travel sensor which is arranged on the activation means (1) is used to determine the position of the shifting element (11) by taking into account the deformation of the actuating means.

5. Device according to Claim 4, **characterized in that** the activation means (1) is embodied as an actuating cylinder.

6. Device according to Claim 5, **characterized in that** the actuating cylinder (1) is embodied as an actuating means of a motor vehicle transmission.

7. Device according to Claim 6, **characterized in that** the actuating cylinder (1) is embodied as an actuating device for a transmission selector shaft.

8. Device according to one of Claims 4 to 7, **characterized in that** the activation means (1) can be activated by a pneumatically or hydraulically acting pressure medium.

## Revendications

1. Procédé de détermination de la position d'un élément de changement de rapport de transmission (11), par exemple d'un manchon de changement de rapport de transmission d'un mécanisme de changement de rapport de transmission de préférence automatisé d'un véhicule automobile, actionné par un moyen d'actionnement (1) par l'intermédiaire d'un moyen d'action,
**caractérisé en ce que**
la déformation du moyen d'action est déterminée en fonction de la pression d'actionnement du moyen d'actionnement (1) détectée par un dispositif (15, 16) de détermination de pression, la position de l'élément (11) de changement de rapport de transmission étant déterminée en tenant compte de la déformation du moyen d'action.

2. Procédé selon la revendication 1, **caractérisé en ce que** le dispositif (15, 16) de détermination de pression est configuré comme détecteur de pression.

3. Procédé selon la revendication 1, **caractérisé en ce qu'**une modification du parcours d'action du moyen d'actionnement (1) est détectée au moyen d'un détecteur de parcours disposé à l'intérieur ou à l'extérieur du moyen d'actionnement (1).

4. Dispositif de détermination de la position d'un élément (11) de changement de rapport de transmission, par exemple un manchon de changement de rapport de transmission, qui présente un moyen d'actionnement (1), un moyen d'action et un dispositif (15, 16) de détermination de pression,
**caractérisé en ce que**
la déformation du moyen d'action est déterminée en fonction de la pression d'actionnement du moyen d'actionnement (1), la position de l'élément (11) de changement de rapport de transmission étant déterminée par l'intermédiaire d'un signal de déplacement d'une sonde de déplacement disposée sur le moyen d'actionnement (1) en tenant compte de la déformation du moyen d'action.

5. Dispositif selon la revendication 4, **caractérisé en ce que** le moyen d'actionnement (1) est configuré comme vérin d'action.

6. Dispositif selon la revendication 5, **caractérisé en ce que** le vérin d'action (1) est configuré comme actionneur de la transmission d'un véhicule automobile.

7. Dispositif selon la revendication 6, **caractérisé en ce que** le vérin d'action (1) est configuré comme dispositif d'action sur un arbre de changement de rapport d'une transmission.

8. Dispositif selon l'une des revendications 4 à 7, **caractérisé en ce que** le moyen d'actionnement (1) peut être actionné par un fluide sous pression qui agit pneumatiquement ou hydrauliquement.
